# FASCICULE DE BREVET EUROPEEN

(11) **EP 1 024 986 B1**
(45) Date de publication et mention de la délivrance du brevet: **10.07.2002**
(21) Numéro de dépôt: 98947624.7
(22) Date de dépôt: 07.10.1998
(51) Int. Cl.: B60T 11/16, B60T 11/232

(54) **MAITRE-CYLINDRE A CLAPETS A COURSE MORTE REDUITE**
HAUPTZYLINDER MIT VENTILE MIT REDUZIERTEM BETÄTIGUNGSTOTGANG
MASTER CYLINDER WITH VALVES HAVING REDUCED LOST MOTION

(30) Priorité: 30.10.1997 FR 9713588
(43) Date de publication de la demande: 09.08.2000
(73) Titulaire: Bosch Systemes de Freinage, 93700 Drancy (FR)
(72) Inventeur: ATTARD, Jean-Marc, F-60500 Chantilly (FR)
(86) Numéro de dépôt international: FR9802146
(87) Numéro de publication internationale: WO9922976

(56) Documents cités:
- DE-A- 3 433 990
- FR-A- 2 209 433
- GB-A- 954 422
- GB-A- 1 155 160
- GB-A- 2 148 434

## Description

La présente invention concerne les maîtres-cylindres, du type à clapets, et destinés en particulier à équiper les circuits de freinage hydraulique des véhicules automobiles.

Un maître-cylindre à clapets est constitué de façon classique par un alésage formé dans un corps et dans lequel coulisse au moins un piston primaire pourvu d'un passage de compensation susceptible de mettre en communication une chambre de pression du maître-cylindre avec un réservoir de fluide sous basse pression lorsque le maître-cylindre est dans sa position de repos, cette communication étant interrompue par un deuxième piston lors de l'actionnement du maître-cylindre par une tige de commande agissant sur le deuxième piston coulissant dans l'alésage du maître-cylindre, un premier ressort de compression sollicitant le piston primaire vers une position arrière de repos, un deuxième ressort de compression étant disposé entre le piston primaire et le deuxième piston et sollicitant ce dernier vers une position arrière de repos, la précontrainte au repos du premier ressort de compression étant supérieure à la précontrainte au repos du deuxième ressort de compression.

Un tel maître-cylindre à clapet est connu par exemple du document GB-B-1 155 160. Dans ce maître-cylindre connu, le piston primaire est en appui, en position de repos, sur une butée formée à l'extrémité d'une vis coopérant avec un alésage taraudé forme dans le corps du maître-cylindre, tandis que le deuxième piston est en appui, en position de repos, sur une butée annulaire maintenue à l'extrémité arrière de l'alésage du corps du maître-cylindre.

Lors de l'actionnement d'un tel maître-cylindre par l'intermédiaire de la tige de commande, le deuxième piston est soulevé de sa butée arrière pour venir obturer le passage de compensation de façon à interrompre la communication entre la chambre de pression du maître-cylindre et le réservoir de fluide sous basse pression, et à ce que la pression dans la chambre de pression puisse augmenter.

Cette course de la tige de commande nécessaire pour obtenir la fermeture du passage de compensation est connue dans la technique du freinage sous le nom de course morte du maître-cylindre. En fonction des tolérances de fabrication des différents éléments composant un maître cylindre, on conçoit donc que la course morte pourra varier dans une production en serie De plus, dans le but d'obtenir une action de freinage le plus rapidement possible après le début de l'actionnement du maître-cylindre, il est très important d'une part que sa course morte soit la plus faible possible, et d'autre part qu'elle puisse être réglée a cette valeur minimale lors de l'assemblage du maître-cylindre et qu'elle conserve cette valeur minimale lors de l'utilisation du maître-cylindre.

Dans le maître-cylindre connu du document précité, la course morte est déterminée par les positions de repos du piston primaire et du deuxième piston, sont déterminées respectivement par une vis de butée et une butée annulaire, dont les positions relatives peuvent varier au cours du temps ou du fonctionnement du maître-cylindre.

La présente invention a donc pour objet de fournir un maître-cylindre dont la course morte puisse être ajustée de façon simple à une valeur minimale, et qui conserve cette valeur minimale tout au long de l'utilisation du maître-cylindre, ce maître-cylindre devant d'autre part être obtenu par des moyens de mise en oeuvre simple et rapide, de façon fiable et peu onéreuse.

Selon la présente invention, les positions arrière de repos du piston primaire et du piston d'entrée sont définies par la même butée solidaire du corps du maître-cylindre.

D'autres buts, caractéristiques et avantages de la présente invention ressortiront plus clairement de la description qui suit d'un exemple de réalisation donné à titre illustratif, en référence aux dessins annexés sur lesquels:

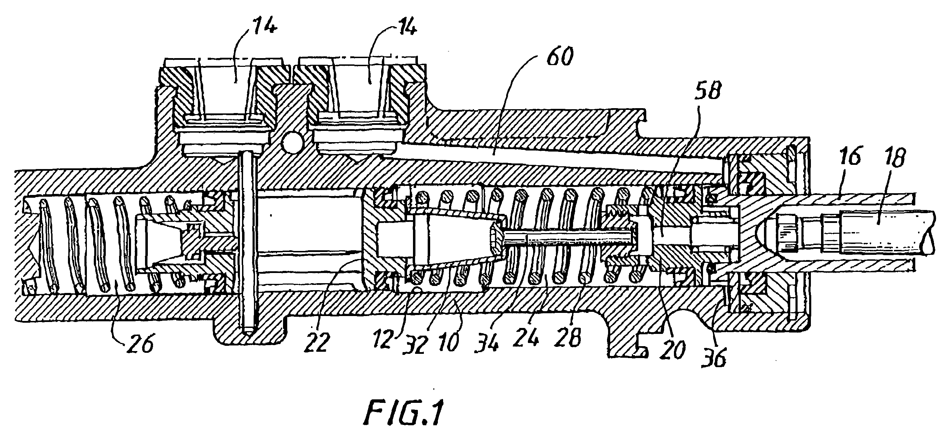

- La Figure 1 est une vue de côté en coupe longitudinale d'un maître-cylindre réalisé conformément à la présente invention, et

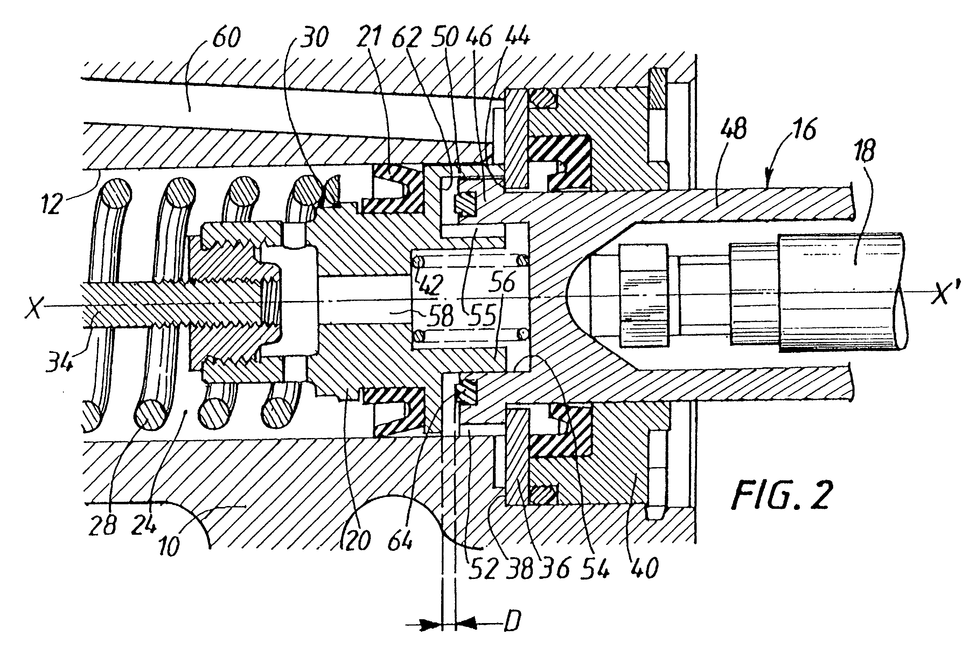

- La Figure 2 est une vue à plus grande échelle de la partie arrière du maître-cylindre de la Figure 1.

On a représenté sur les Figures un maître-cylindre réalisé conformément à l'invention. Par convention, on appelle "avant" la direction vers laquelle les pièces se déplacent lors de l'actionnement du maître-cylindre et "arrière" la direction vers laquelle les pièces se déplacent pour revenir dans leur position de repos. Sur les Figures, l'avant est ainsi à gauche et l'arrière est à droite

Le maître-cylindre représente sur les Figures est constitue d'un corps 10 dans lequel est réalisé un alésage borgne 12. Un réservoir de fluide de freinage sous basse pression (non représenté) est connecté à ce maître-cylindre par l'intermédiaire d'au moins une communication 14. Un piston d'actionnement 16 est susceptible de coulisser dans cet alésage 12, sous l'action d'une tige de commande 18, elle-même mise en mouvement par une pédale de freinage (non représentée) située dans l'habitacle du véhicule ou par un servomoteur pneumatique d'assistance (non représenté) actionné par cette pédale de freinage.

Un piston primaire 20 est susceptible de coulisser de façon étanche grâce à une coupelle 21 dans l'alésage 12 et il y délimite avec le fond de l'alésage borgne 12 ou, comme on l'a représenté sur les Figures, avec un piston secondaire 22, une chambre de travail primaire 24, le piston secondaire 22 délimitant avec le fond de l'alésage borgne 12 une chambre de travail secondaire 26. La chambre primaire 24 est reliée à un circuit primaire de freinage (non représenté) par un orifice de sortie primaire (non représenté). De même, la chambre secondaire 26 est reliée à un circuit secondaire de freinage (non représenté) par un orifice de sortie secondaire (non représenté).

Le piston primaire 20 est sollicité dans sa position arrière de repos par un dispositif du type boite à ressort, constitué d'un ressort 28 en appui d'une part sur un épaulement 30 du piston primaire 20, et d'autre part sur une coupelle 32 dont l'écartement maximal par rapport au piston primaire 20 est déterminé par la tête d'une vis 34 vissée sur l'extrémité avant du piston primaire 20.

Dans sa position de repos, le piston primaire 20 est en appui sur le corps 10 du maître-cylindre, ou, comme on l'a représenté, sur une rondelle 36 solidaire du corps 10 du maître-cylindre, par exemple disposée entre un épaulement 38 du corps 10 et un dispositif 40 d'étanchéité entre l'intérieur du maître-cylindre et l'extérieur de celui-ci, et notamment entre le corps 10 du maître-cylindre et le piston d'actionnement 16.

Le piston d'actionnement 16 est lui-même sollicité dans sa position arrière de repos par un ressort de compression 42 disposé entre lui et le piston primaire 20 Le ressort 42 a une précontrainte au repos inférieure à celle du ressort 28, de sorte que, dans sa position de repos, le piston d'actionnement 16 est lui aussi en appui sur le corps 10 du maître-cylindre, ou, comme on l'a représente, sur la rondelle 36 solidaire du corps 10 du maître-cylindre, par l'intermédiaire d'un épaulement 44 forme entre une partie avant 46 de diamètre supérieur et une partie arrière 48 de diamètre inférieur

De façon plus précise, le piston primaire 20 est en appui sur le corps 10 du maître-cylindre par l'intermédiaire de doigts 50, en nombre au moins égal à deux, et régulièrement répartis angulairement autour de l'axe X-X' du maître-cylindre, ces doigts 50 traversant des gorges axiales 52 formées à la périphérie de la partie 46 du piston d'actionnement 16, en nombre égal à celui du nombre de doigts 50 et régulièrement réparties angulairement autour de l'axe X-X' du maître-cylindre.

Les doigts 50 sont formés avec une surface périphérique radiale extérieure de même rayon de courbure que celui de l'alésage 12 de façon à pouvoir coulisser dans cet alésage 12 et ils forment ainsi un moyen de guidage du piston primaire 20 dans l'alésage 12. De la même manière, la partie avant 46 du piston d'actionnement 16 est formée, en dehors des gorges axiales 52, avec une surface périphérique extérieure de même rayon de courbure que celui de l'alésage 12, de façon à pouvoir coulisser dans cet alésage 12 et à constituer un moyen de guidage du piston d'actionnement 16 dans l'alésage 12.

La partie avant 46 du piston d'actionnement 16 est formée avec un alésage borgne 54 dans lequel est susceptible de coulisser de façon non étanche, grâce par exemple à des rainures axiales 55, une partie arrière 56 du piston primaire 20, de façon à assurer le guidage de ce dernier par rapport au piston d'actionnement 16. Les rainures axiales 55 peuvent être formées aussi bien sur la surface périphérique extérieure de la partie arrière 56 du piston primaire 20 que sur la surface périphérique intérieure de l'alésage borgne 54 du piston d'actionnement 16.

Le piston primaire 20 est formé avec un passage de compensation 58 autorisant, en position de repos, la communication entre la chambre de travail primaire 24 et le réservoir de fluide sous basse pression relié à la communication 14, par l'intermédiaire des rainures axiales 55, des gorges axiales 52, et d'un perçage 60 formé dans le corps 10 du maître-cylindre.

Le piston primaire 20 est également formé, entre la partie arrière 56 et les doigts 50, avec une surface annulaire 62, perpendiculaire à l'axe X-X' et plane, formant un siège pour un clapet annulaire 64, en matériau elastomère tel que du caoutchouc, disposé sur la face avant de la partie avant 46 du piston d'actionnement 16 On pourra bien entendu prévoir que le clapet annulaire soit disposé sur le piston primaire 20 et coopère avec un siège de clapet formé à l'avant du piston d'actionnement 16.

D'après les explications qui précèdent, on aura compris comment la présente invention est mise en oeuvre. Au repos, toutes les pièces mobiles occupent leur position arrière représentée sur les Figures. En particulier, la chambre de travail primaire 24 communique avec le réservoir de fluide sous basse pression par l'intermédiaire du passage de compensation 58, des rainures axiales 55, des gorges axiales 52 et du perçage 60

Lors de l'actionnement du maître-cylindre par l'application d'un effort sur la tige de commande 18, le piston d'actionnement 16 quitte sa position de repos et il s'éloigne de la rondelle 36 ou du corps 10 du maître-cylindre en comprimant le ressort 42. Il continue ce mouvement jusqu'à ce que le clapet annulaire 64 vienne au contact du siège de clapet 62 formé sur le piston primaire 20. Lors de ce contact, la communication entre le réservoir de fluide sous basse pression relié au conduit 60 et la chambre de travail primaire 24 est interrompue.

La course du piston d'actionnement 16 nécessaire pour fermer la communication entre le réservoir de fluide sous basse pression et la chambre de travail primaire correspond à ce que l'on appelle la course morte du maître-cylindre.

Cette course morte une fois effectuée, le piston d'actionnement 16 fait alors quitter sa position de repos au piston primaire 20 qui s'éloigne à son tour de la rondelle 36 ou du corps 10 du maître-cylindre en comprimant le ressort 28, et en faisant augmenter la pression dans la chambre de travail primaire 24, cette augmentation de pression étant transmise aux moteurs de frein (non représentés), et éventuellement au piston secondaire 22 dans le cas d'un maître-cylindre en tandem.

On voit donc bien que, grâce à la présente invention, la course morte du maître-cylindre n'est représentée que par la distance D entre le clapet annulaire 64 porté par le piston d'actionnement 16, et la surface annulaire 62 portée par le piston primaire 20 Ces deux pistons étant au repos en appui sur la même piece 36, il sera très facile de déterminer cette distance D lors de la fabrication ou l'assemblage du maître-cylindre pour lui donner toute valeur prédéterminée, et en particulier aussi petite qu'on le désire De plus, on est assuré que cette distance D sera conservée dans le temps, quelle que soit l'utilisation du maître-cylindre, et même si on est amené à le démonter et à le remonter pour des opérations d'entretien.

On a donc bien réalisé selon l'invention un maître-cylindre dont la course morte peut être fixée par construction de façon simple à toute valeur désirée, et de préférence minimale, et qui conserve cette valeur minimale tout au long de l'utilisation du maître-cylindre. Une telle course morte minimale est de plus obtenue très simplement, de façon fiable et peu onéreuse.

Bien entendu, l'invention n'est pas limitée au mode de réalisation qui vient d'être décrit, mais est susceptible de recevoir de nombreuses modifications qui apparaîtront à l'homme du métier et qui rentrent dans son cadre. C'est ainsi que, par exemple l'invention peut s'appliquer à des maîtres-cylindres simples ou en tandem, ces maîtres-cylindres pouvant être commandés directement par le pédale de freinage ou par un servomoteur pneumatique d'assistance au freinage, et le piston secondaire dans le cas d'un maître-cylindre en tandem pouvant être lui-même à clapet, à trou de dilatation ou de tout autre type.

## Revendications

1. Maître-cylindre, en particulier pour des systèmes de freinage hydraulique de véhicules automobiles, comportant un alésage (12) formé dans un corps (10) et dans lequel coulisse au moins un piston primaire (20) pourvu d'un passage de compensation (58) susceptible de mettre en communication une chambre de pression (24) du maître-cylindre avec un réservoir de fluide sous basse pression lorsque le maître-cylindre est dans sa position de repos, cette communication étant interrompue par un deuxième piston (16) lors de l'actionnement du maître-cylindre par une tige de commande (18) agissant sur le deuxième piston (16) coulissant dans l'alésage (12) du maître-cylindre, un premier ressort de compression (28) sollicitant le piston primaire (20) vers une position arrière de repos, un deuxième ressort de compression (42) étant disposé entre le piston primaire (20) et le deuxième piston (16) et sollicitant ce dernier vers une position arrière de repos, la précontrainte au repos du premier ressort de compression (28) étant supérieure à la précontrainte au repos du deuxième ressort de compression (42), **caractérisé en ce que** les positions arrière de repos du piston primaire (20) et du deuxième piston (16) sont définies par la même butée (36) solidaire du corps (10) du maître-cylindre.

2. Maître-cylindre selon la revendication 1, **caractérisé en ce que** le piston primaire (20) est en appui sur le corps (10) du maître-cylindre par l'intermédiaire d'au moins deux doigts (50), régulièrement répartis angulairement autour d'un axe (X-X') de symétrie du maître-cylindre.

3. Maître-cylindre selon la revendication 2, **caractérisé en ce que** les doigts (50) du piston primaire (20) traversent des gorges axiales (52) formées à la périphérie d'une partie avant (46) du deuxième piston (16), en nombre égal à celui du nombre de doigts (50) du piston primaire (20) et régulièrement réparties angulairement autour de l'axe (X-X') de symétrie du maître-cylindre.

4. Maître-cylindre selon la revendication 3, **caractérisé en ce que** les doigts (50) du piston primaire (20) sont formés avec une surface périphérique radiale extérieure de même rayon de courbure que celui de l'alésage (12) formé dans le corps (10) du maître-cylindre, de façon à pouvoir coulisser dans cet alésage (12) et à former un moyen de guidage du piston primaire (20) dans l'alésage (12) du maître-cylindre

5. Maître-cylindre selon la revendication 4, **caractérisé en ce que** la partie avant (46) du deuxième piston (16) est formee avec une surface périphérique exterieure de même rayon de courbure que celui de l'alésage (12) formé dans le corps (10) du maître-cylindre, de façon à pouvoir coulisser dans cet alésage (12) et à former un moyen de guidage du deuxième piston 16 dans l'alésage (12) du maître-cylindre.

6. Maître-cylindre selon la revendication 5, **caractérisé en ce que** les gorges axiales (52) du deuxième piston (16) sont formées dans la surface périphérique extérieure de la partie avant (46) du deuxième piston (16).

7. Maître-cylindre selon la revendication 1, **caractérisé en ce que** la partie avant (46) du deuxième piston (16) est formée avec un alésage borgne (54) dans lequel est susceptible de coulisser de façon non étanche une partie arrière (56) du piston primaire (20), de façon à former un moyen de guidage du piston primaire (20) par rapport au deuxième piston (16).

8. Maître-cylindre selon la revendication 1, **caractérisé en ce que** des rainures axiales (55) sont formées sur la surface périphérique extérieure de la partie arrière (56) du piston primaire (20) ou sur la surface périphérique intérieure de l'alésage borgne (54) du deuxième piston (16).

9. Maître-cylindre selon l'une quelconque des revendications précédentes, **caractérisé en ce que** le piston primaire (20) est formé avec une surface annulaire (62), perpendiculaire à l'axe (X-X') de symétrie du maître-cylindre et plane, formant un siège pour un clapet annulaire (64), disposé sur la face avant de la partie avant (46) du deuxième piston (16).

10. Maître-cylindre selon l'une quelconque des revendications 1 à 8, **caractérisé en ce que** la face avant de la partie avant (46) du deuxième piston (16) est formée avec une surface annulaire, perpendiculaire à l'axe (X-X') de symétrie du maître-cylindre et plane, formant un siège pour un clapet annulaire disposé sur le piston primaire (20).

## Patentansprüche

1. Hauptzylinder, insbesondere für hydraulische Bremssysteme von Kraftfahrzeugen, mit einer Bohrung (12), die in einem Körper (10) gebildet ist und in der wenigstens ein Primärkolben (20) gleitet, der mit einem Ausgleichsdurchgang (58) versehen ist, der eine Druckkammer (24) des Hauptzylinders mit einem Niederdruck-Fluidvorratsbehälter verbinden kann, wenn sich der Hauptzylinder in seiner Ruhestellung befindet, wobei diese Verbindung von einem zweiten Kolben (16) unterbrochen wird, wenn der Hauptzylinder durch eine Steuerstange (18) betätigt wird, die auf den zweiten Kolben (16) einwirkt, der in der Bohrung (12) des Hauptzylinders gleitet, wobei eine erste Druckfeder (28) den Primärkolben (20) in eine hintere Ruhestellung beaufschlagt und eine zweite Druckfeder (42) zwischen dem Primärkolben (20) und dem zweiten Kolben (16) angeordnet ist und den zweiten Kolben in eine hintere Ruhestellung beaufschlagt, wobei die Vorspannung der ersten Druckfeder (28) in der Ruhestellung größer ist als die Vorspannung der zweiten Druckfeder (42) in der Ruhestellung, **dadurch gekennzeichnet, daß** die hinteren Ruhestellungen des Primärkolbens (20) und des zweiten Kolbens (16) durch denselben Anschlag (36) definiert sind, der fest mit dem Körper (10) des Hauptzylinders ist.

2. Hauptzylinder nach Anspruch 1, **dadurch gekennzeichnet, daß** der Primärkolben (20) an dem Körper (10) des Hauptzylinders durch wenigstens zwei Nasen (50) anliegt, die im Winkel gleichmäßig um eine Symmetrieachse (X-X') des Hauptzylinders verteilt sind

3. Hauptzylinder nach Anspruch 2, **dadurch gekennzeichnet, daß** die Nasen (50) des Primärkolbens (20) axiale Nuten (52) durchqueren, die am Umfang eines vorderen Abschnittes (46) des zweiten Kolbens (16) mit einer Anzahl ausgebildet sind, die gleich der Anzahl der Nasen (50) des Primärkolbens (20) ist, und die im Winkel gleichmäßig um die Symmetrieachse (X-X') des Hauptzylinders verteilt sind.

4. Hauptzylinder nach Anspruch 3, **dadurch gekennzeichnet, daß** die Nasen (50) des Primärkolbens (20) mit einer radialen Außenumfangsfläche ausgebildet sind, deren Krümmungsradius derselbe ist wie derjenige der im Körper (10) des Hauptzylinders ausbildeten Bohrung (12), so daß sie in der Bohrung (12) gleiten können und ein Mittel zur Führung des Primärkolbens (20) in der Bohrung (12) des Hauptzylinders bilden.

5. Hauptzylinder nach Anspruch 4, **dadurch gekennzeichnet, daß** der vordere Abschnitt (46) des zweiten Kolbens (16) mit einer Außenumfangsfläche ausgebildet ist, deren Krümmungsradius derselbe ist wie derjenige der im Körper (10) des Hauptzylinders ausgebildeten Bohrung (12), so daß er in der Bohrung (12) gleiten kann und ein Mittel zur Führung des zweiten Kolbens (16) in der Bohrung (12) des Hauptzylinders gebildet ist.

6. Hauptzylinder nach Anspruch 5, **dadurch gekennzeichnet, daß** die axialen Nuten (52) des zweiten Kolbens (16) in der Außenumfangsfläche des vorderen Abschnittes (46) des zweiten Kolbens (16) gebildet sind.

7. Hauptzylinder nach Anspruch 1, **dadurch gekennzeichnet, daß** der vordere Abschnitt (46) des zweiten Kolbens (16) mit einer Blindbohrung (54) ausgebildet ist, in der in nicht-dichter Weise ein hinterer Abschnitt (56) des Primärkolbens (20) gleiten kann, so daß ein Mittel zur Führung des Primärkolbens (20) bezüglich des zweiten Kolbens (16) gebildet ist.

8. Hauptzylinder nach Anspruch 1, **dadurch gekennzeichnet, daß** in der Außenumfangsfläche des hinteren Abschnittes (56) des Primärkolbens (20) oder in der Innenumfangsfläche der Blindbohrung (54) des zweiten Kolbens (16) axiale Nuten (55) gebildet sind.

9. Hauptzylinder nach einem der vorhergehenden Ansprüche, **dadurch gekennzeichnet, daß** der Primärkolben (20) mit einer Ringfläche (62) versehen ist, die senkrecht zur Symmetrieachse (X-X') des Servomotors und eben ist und die einen Sitz für ein ringförmiges Ventilelement (64) bildet, das auf der vorderen Seite des vorderen Abschnittes (46) des zweiten Kolbens (16) angeordnet ist.

10. Hauptzylinder nach einem Ansprüche 1 bis 8, **dadurch gekennzeichnet, daß** die vordere Seite des vorderen Abschnittes (46) des zweiten Kolbens (16) mit einer Ringfläche versehen ist, die senkrecht zur Symmetrieachse (X-X') des Hauptzylinders und eben ist und die einen Sitz für ein ringförmiges Ventilelement bildet, das an dem Primärkolben (20) angeordnet ist.

## Claims

1. Master cylinder, particularly for hydraulic braking systems of motor vehicles, comprising a bore (12) formed in a body (10) and in which there slides at least one primary piston (20) provided with a compensation passage (58) capable of placing a pressure chamber (24) of the master cylinder in communication with a reservoir of fluid at low pressure when the master cylinder is in its position of rest, this communication being interrupted by a second piston (16) upon actuation of the master cylinder by a control rod (18) acting on the second piston (16) sliding in the bore (12) of the master cylinder, a first compression spring (28) urging the primary piston (20) towards a rear position of rest, a second compression spring (42) being arranged between the primary piston (20) and the second piston (16) and urging the latter towards a rear position of rest, the preload at rest of the first compression spring (28) exceeding the preload at rest of the second compression spring (42), **characterized in that** the rear positions of rest of the primary piston (20) and of the second piston (16) are defined by the same stop (36) integral with the body (10) of the master cylinder.

2. Master cylinder according to Claim 1, **characterized in that** the primary piston (20) rests on the body (10) of the master cylinder via at least two fingers (50) which are uniformly angularly spaced about an axis (X-X') of symmetry of the master cylinder.

3. Master cylinder according to Claim 2, **characterized in that** the fingers (50) of the primary piston (20) pass through axial slots (52) formed at the periphery of a front part (46) of the second piston (16), there being as many of these slots as there are fingers (50) on the primary piston (20) and these slots being uniformly angularly spaced about the axis (X-X') of symmetry of the master cylinder.

4. Master cylinder according to Claim 3, **characterized in that** the fingers (50) of the primary piston (20) are formed with an outer radial peripheral surface that has the same radius of curvature as that of the bore (12) formed in the body (10) of the master cylinder, so as to be able to slide in this bore (12) and form a means of guiding the primary piston (20) in the bore (12) of the master cylinder.

5. Master cylinder according to Claim 4, **characterized in that** the front part (46) of the second piston (16) is formed with an outer peripheral surface that has the same radius of curvature as that of the bore (12) formed in the body (10) of the master cylinder, so as to be able to slide in this bore (12) and form a means of guiding the second piston 16 in the bore (12) of the master cylinder.

6. Master cylinder according to Claim 5, **characterized in that** the axial slots (52) of the second piston (16) are formed in the outer peripheral surface of the front part (46) of the second piston (16).

7. Master cylinder according to Claim 1, **characterized in that** the front part (46) of the second piston (16) is formed with a blind bore (54) in which a rear part (56) of the primary piston (20) can slide in non-leaktight fashion so as to form a means of guiding the primary piston (20) with respect to the second piston (16).

8. Master cylinder according to Claim 1, **characterized in that** axial grooves (55) are formed on the outer peripheral surface of the rear part (56) of the primary piston (20) or on the inner peripheral surface of the blind bore (54) of the second piston (16).

9. Master cylinder according to any one of the preceding claims, **characterized in that** the primary piston (20) is formed with an annular surface (62) perpendicular to the axis (X-X') of symmetry of the master cylinder and flat, forming a seat for an annular valve (64) arranged on the front face of the front part (46) of the second piston (16).

10. Master cylinder according to any one of Claims 1 to 8, **characterized in that** the front face of the front part (46) of the second piston (16) is formed with an annular surface, perpendicular to the axis (X-X') of symmetry of the master cylinder and flat, forming a seat for an annular valve arranged on the primary piston (20).
